# EUROPÄISCHE PATENTANMELDUNG

(11) **EP 4 336 479 A1**
(43) Veröffentlichungstag der Anmeldung: **13.03.2024**
(21) Anmeldenummer: 23195283.9
(22) Anmeldetag: 05.09.2023
(51) Int. Cl.: G09B 23/32

(54) **DUMMY-VORRICHTUNG ZUR SIMULATION EINER MENSCHLICHEN ATMUNG UND VERFAHREN ZUM BETREIBEN EINER DUMMY-VORRICHTUNG**

(30) Priorität: 09.09.2022 DE 102022122994
(71) Anmelder: 4Activesystems GmbH, 8772 Traboch (AT)
(72) Erfinder: Fritz, Martin, 8723 Kobenz (AT); Wimmer, Thomas, 9313 St. Georg am Längsee (AT)
(74) Vertreter: Dilg, Haeusler, Schindelmann Patentanwaltsgesellschaft mbH

(57) **Zusammenfassung**

Die vorliegende Erfindung betrifft eine Dummy-Vorrichtung (100). Die Dummy-Vorrichtung (100) weist auf ein Rumpfelement (101), welches einen Rumpf eines Menschen nachbildet; ein Atmungs-Simulationselement (110), welches das Rumpfelement (101) zumindest teilweise überdeckt und welches beweglich in Bezug auf das Rumpfelement (101) angeordnet ist; und ein Antriebselement (120), welches eingerichtet ist, das Atmungs-Simulationselement (110) sequenziell von dem Rumpfelement (101) weg und zu dem Rumpfelement (101) hin mit einer Atmungsfrequenz zu bewegen, um eine Bewegungscharakteristik einer menschlichen Atmung nachzubilden. Die Erfindung betrifft ferner ein Verfahren zum Betreiben einer Dummy-Vorrichtung (100).

## Beschreibung

### Technisches Gebiet

Die Erfindung betrifft allgemein das technische Gebiet von Dummy-Vorrichtungen und im Speziellen eine Dummy-Vorrichtung zur Simulation einer menschlichen Atmung sowie ein Verfahren zum Betreiben einer Dummy-Vorrichtung.

### Hintergrund der Erfindung

In verschiedenen Testsystemen, beispielsweise für die Entwicklung von Assistenzsystemen im Automobilbereich, werden Dummys eingesetzt wie etwa Insassen-Dummys, Fußgänger-Dummys, Motorrad-Dummys oder Auto-Dummys. Solche Dummys gleichen in zumindest einem Aspekt den Objekten oder Personen, welche die Dummys simulieren. Beispielsweise können Dummys eine ähnliche geometrische Form oder eine ähnliche Größe haben wie die zu simulierenden Objekte oder Personen. Welche Eigenschaften ein Dummy realitätsnah nachbilden sollte, richtet sich nach dem jeweiligen Zweck des zu testenden Assistenzsystems. Beispielsweise sollte ein Auto-Dummy für den Test von Antikollisionssystemen in Größe und Geschwindigkeit ein Auto im Straßenverkehr nachbilden sowie für die Antikollisionssysteme als Auto erkennbar sein. Dafür könnte der Auto-Dummy etwa ein ähnliches Material aufweisen wie ein tatsächliches Auto. Die Herausforderungen bei der Entwicklung geeigneter Dummys unterscheiden sich je nach Anwendung erheblich.

### Darstellung der Erfindung

Es ist eine Aufgabe der vorliegenden Erfindung, eine Dummy-Vorrichtung bereitzustellen, die bestimmte Bewegungscharakteristiken von Personen realitätsnah nachbildet, so dass unterschiedliche Zustände der Personen, beispielsweise verschiedene Wach- oder Schlafzustände, anhand der Bewegungscharakteristiken erkennbar oder identifizierbar sind.

Diese Aufgabe wird mit einer Dummy-Vorrichtung sowie mit einem Verfahren zum Betreiben einer Dummy-Vorrichtung gemäß den unabhängigen Ansprüchen gelöst.

Gemäß einem Aspekt wird eine Dummy-Vorrichtung beschrieben. Die Dummy-Vorrichtung weist auf (i) ein Rumpfelement, welches einen Rumpf eines Menschen nachbildet; (ii) ein Atmungs-Simulationselement, welches das Rumpfelement zumindest teilweise überdeckt und welches beweglich in Bezug auf das Rumpfelement angeordnet oder ausgebildet ist; und (iii) ein Antriebselement, welches eingerichtet ist, das Atmungs-Simulationselement sequenziell von dem Rumpfelement weg und zu dem Rumpfelement hin mit einer Atmungsfrequenz zu bewegen, um eine Bewegungscharakteristik einer menschlichen Atmung nachzubilden.

Gemäß einem weiteren Aspekt wird ein Verfahren zum Betreiben einer Dummy-Vorrichtung beschrieben. Das Verfahren weist auf ein Bereitstellen einer Dummy-Vorrichtung, wobei die Dummy-Vorrichtung aufweist ein Rumpfelement, welches einen Rumpf eines Menschen nachbildet, sowie ein Atmungs-Simulationselement, welches das Rumpfelement zumindest teilweise überdeckt und welches beweglich in Bezug auf das Rumpfelement angeordnet oder ausgebildet ist. Das Verfahren weist ferner auf ein Bewegen eines Antriebselements der Dummy-Vorrichtung derart, dass sich das Atmungs-Simulationselement sequenziell von dem Rumpfelement weg und zu dem Rumpfelement hin mit einer Atmungsfrequenz bewegt, um eine Bewegungscharakteristik einer menschlichen Atmung nachzubilden.

Im Kontext der Erfindung kann der Begriff "Dummy-Vorrichtung" eine Vorrichtung bezeichnen, die ein Objekt simuliert oder nachbildet, insbesondere in Bezug auf besonders relevante Eigenschaften. Das Objekt kann eine Person sein, beispielsweise ein Neugeborenes, ein Baby, ein Kleinkind, ein Kind, ein Jugendlicher oder ein Erwachsener. Die Dummy-Vorrichtung kann ein zu simulierendes Objekt, beispielsweise eine zu simulierende Person, nachbilden oder simulieren.

Im Kontext der Erfindung können die Begriffe "Nachbilden" oder "Simulieren" insbesondere bezeichnen, dass Dummy-Vorrichtung und zu simulierendes Objekt in bestimmten Eigenschaften ähnlich sind oder im Wesentlichen übereinstimmen, beispielsweise in der Form, den geometrischen Ausmaßen oder einem Material. Insbesondere können Dummy-Vorrichtung und zu simulierendes Objekt in solchen Eigenschaften übereinstimmen, die für Sensoren von Testsystemen wahrnehmbar oder erkennbar sind. Zum Beispiel kann ein Signalecho bei Reflexion an der Dummy-Vorrichtung und dem zu simulierenden Objekt ähnlich sein.

Im Kontext der Erfindung kann der Begriff "Atmungs-Simulationselement" insbesondere bezeichnen ein Element der Dummy-Vorrichtung, welches angeordnet und eingerichtet ist, eine Atmung zu simulieren, insbesondere die Bewegungscharakteristik einer Atmung zu simulieren. Beispielsweise können die simulierte Atmung des Dummys und die Atmung der zu simulierenden Person übereinstimmen in Bezug auf zumindest eines von einer Atmungsfrequenz, einem Atmungshub, einer Atmungsanordnung, beispielsweise in einem Bauchbereich und/oder einem Brustbereich.

Das Atmungs-Simulationselement überdeckt das Rumpfelement zumindest teilweise, insbesondere in einem Bauchbereich, einem Brustbereich und/oder einem Hüftbereich. Dafür kann das Atmungs-Simulationselement in Bezug auf eine von Schultern und Hüfte des Dummys aufgespannte Ebene vor dem Rumpfelement angeordnet sein. Das Atmungs-Simulationselement kann beispielsweise im Bereich einer Bauchdecke und/oder eines Brustkorbs des Rumpfelements angeordnet sein. Das Atmungs-Simulationselement kann verformbar sein. Durch die Verformbarkeit kann eine Beweglichkeit des Atmungs-Simulationselements von dem Rumpfelement weg und zu dem Rumpfelement hin realisierbar sein.

Das Atmungs-Simulationselement kann konfiguriert sein, Signalwellen zu reflektieren und/oder zu emittieren. Zum Beispiel kann es Signalwellen derart reflektieren, dass das reflektierte Signal, insbesondere die Differenz zwischen einfallendem und reflektiertem Signal, charakteristisch ist für das zu simulierende Objekt, insbesondere für einen beweglichen Teil des zu simulierenden Objekts.

Signalwellen können jegliche Art von Signalen sein, die wellenförmig ausgeprägt sind, insbesondere eine sich räumlich ausbreitende periodische Schwingung aufweisen, oder zumindest aus wellenförmigen Signalen zusammensetzbar sein. Signalwellen können transversale oder longitudinale Wellen sein. Sie können mechanische an ein Medium gebundene Wellen sein oder Wellen, die sich auch im Vakuum ausbreiten. Signalwellen können beispielsweise elektromagnetische oder akustische Wellen sein, insbesondere Radiowellen, Mikrowellen, Licht, Röntgenstrahlung oder Radarwellen. Signalwellen können beispielsweise auch Laserstrahlen oder Lidarwellen sein, insbesondere Laserpulse.

Im Kontext der Erfindung kann der Begriff "Rumpfelement" insbesondere bezeichnen ein Element der Dummy-Vorrichtung, welches einen Rumpf einer Person oder eines Menschen nachbildet. Der Rumpf kann definiert sein als Teil eines menschlichen Körpers ohne Kopf und Gliedmaßen. Er kann zumindest eines umfassen von einem Brustbereich, einem Bauchbereich und einem Hüftbereich. Dass das Rumpfelement einen Rumpf "nachbildet" kann insbesondere bezeichnen, dass die Größenverhältnisse des Rumpfelements und des nachgebildeten Rumpfs annähernd übereinstimmen, beispielsweise mit einer Abweichung von weniger als 50 Prozent, insbesondere weniger als 30 Prozent, insbesondere weniger als 10 Prozent. Alternativ oder zusätzlich kann der genannte Ausdruck bezeichnen, dass eine Form oder ein Profil des Rumpfelements und des nachgebildeten Rumpfs ähnlich sind oder übereinstimmen, insbesondere jeweils aufweisen zumindest eines von einem Schulterbereich, an dem Gliedmaßen angeordnet sein können, einem Halsbereich, an dem ein Kopf angeordnet sein kann, einem Brustbereich, einem Bauchbereich und einem Hüftbereich, an dem weitere Gliedmaßen angeordnet sein können.

Eine "bewegliche" Anordnung des Atmungs-Simulationselements in Bezug auf das Rumpfelement kann bezeichnen, dass zumindest Teile des Atmungs-Simulationselements, insbesondere das ganze Atmungs-Simulationselement, in Bezug auf das Rumpfelement beweglich sind, wobei die Bewegung oder Beweglichkeit zumindest zum Teil, insbesondere vollständig, auf eine Verformung des Atmungs-Simulationselements zurückführbar sein kann. Entsprechend kann das Atmungs-Simulationselement verformbar sein. Beispielsweise kann es an einer oder mehreren Positionen an dem Rumpfelement fest montiert oder befestigt sein. Die Beweglichkeit kann dann aus einer Dehnbarkeit und/oder Verformbarkeit des Atmungs-Simulationselements resultieren. Ferner kann das Atmungs-Simulationselement in verschiedene Bereiche geteilt sein. Diese Bereiche können aus unterschiedlichen Materialien und/oder Materialzusammensetzungen bestehen und/oder können voneinander durch ein jeweiliges Teilungselement getrennt sein, beispielsweise eine Vertiefung, eine Nut oder einen Falz. An dem Teilungselement kann das Atmungs-Simulationselement besonders leicht verformbar, insbesondere biegbar oder abwinkelbar, sein.

Im Kontext der Erfindung kann der Begriff "Antriebselement" insbesondere bezeichnen ein Element der Dummy-Vorrichtung, welches eingerichtet ist, das Atmungs-Simulationselement in einer vorgegebenen Weise, beispielsweise entsprechend einer vorgegebenen Bewegungscharakteristik, zu bewegen. Dafür kann das Antriebselement mit dem Atmungs-Simulationselement mechanisch gekoppelt sein. Zum Beispiel können sich Antriebselement und Atmungs-Simulationselement direkt oder indirekt berühren, so dass ein Kraftübertrag von dem Antriebselement auf das Atmungs-Simulationselement möglich ist. Das Antriebselement kann, muss aber nicht mit dem Atmungs-Simulationselement fest verbunden sein, beispielweise verklebt oder verschraubt. Das Antriebselement kann eine Oberfläche aufweisen, welche eingerichtet ist, das Atmungssimulationselement von dem Rumpfelement wegzubewegen und/oder zu dem Rumpfelement hinzubewegen. Die Bewegung in Richtung Rumpfelement kann durch eine elastische Rückformung des Atmungs-Simulationselements erfolgen.

Das Antriebselement kann zwischen Rumpfelement und Atmungs-Simulationselement angeordnet sein. Das Antriebselement kann beispielsweise mittels eines Atmungssimulations-Aktuators, z.B. eines Elektromotors, insbesondere eines Linearmotors oder eines Servomotors, antreibbar sein. Ein Servomotor kann als ein Elektromotor definiert sein, der die Kontrolle der Winkelposition einer Motorwelle, der Drehgeschwindigkeit und/oder der Drehbeschleunigung erlaubt. Der Atmungssimulations-Aktuator kann, muss aber nicht Teil des Antriebselements sein. Eine Steuereinheit kann eingerichtet sein, das Antriebselement und damit die Bewegung des Atmungs-Simulationselements zu steuern. Das Antriebselement, der Atmungssimulations-Aktuator und/oder die Steuereinheit können an dem Rumpfelement angeordnet sein, insbesondere fest mit dem Rumpfelement verbunden sein.

Die Bewegung des Antriebselements und/oder des Atmungs-Simulationselement kann entlang einer Bewegungsrichtung erfolgen, die senkrecht zu einer von Schultern und Hüfte aufgespannten Ebene ausgerichtet ist. Die Bewegung kann im Wesentlichen linear sein. Wenn das Rumpfelement plattenförmig ausgebildet ist, kann die Bewegungsrichtung senkrecht zu der Rumpfplatte sein. In einer "sequenziellen" Bewegung wird eine vorgegebene Abfolge zumindest einmal wiederholt, insbesondere vielmals wiederholt, zum Beispiel mindestens zehnmal oder mindestens hundertmal. Dabei können Abweichungen in der Abfolge auftreten. Die vorgegebene Abfolge kann ein simulierter Atemzyklus sein. Die Abfolge kann durch eine Bewegung des Atmungs-Simulationselements weg von dem Rumpfelement und wieder hin zu dem Rumpfelement gekennzeichnet sein.

Ein "Atmungshub" kann insbesondere den Weg oder die Strecke bezeichnen, den ein vorgegebener Bereich oder ein vorgegebener Punkt des Atmungs-Simulationselements, beispielsweise ein Bauchbereich, ein unterer Brustbereich und/oder ein oberer Brustbereich, entlang der Bewegungsrichtung während eines Atemzyklus zurücklegt, insbesondere von einem Zustand maximalen "Ausatmens" zu einem Zustand maximalen "Einatmens", also zwischen einem Zustand, in dem das Atmungs-Simulationselement dem Rumpfelement am nächsten ist, und einem Zustand in dem der Abstand zwischen Atmungs-Simulationselement und Rumpfelement maximal ist. Der Atmungshub kann ein durchschnittlicher Atmungshub sein.

Die "Atmungsfrequenz" kann eine durchschnittliche Atmungsfrequenz sein, beispielsweise gemittelt über zehn aufeinanderfolgende Atemzyklen, insbesondere über hundert aufeinanderfolgende Atemzyklen. Ein Atemzyklus kann definiert sein über eine Bewegung des Atmungs-Simulationselements weg von dem Rumpfelement und eine darauffolgende Bewegung des Atmungs-Simulationselements hin zu dem Rumpfelement, insbesondere derart dass die Anordnung des Atmungs-Simulationselements vor dem Atemzyklus der Anordnung des Atmungs-Simulationselements nach dem Atemzyklus entspricht, zum Beispiel identisch ist oder lediglich geringe Abweichungen im Vergleich mit der Bewegung des Atmungs-Simulationselements während des Atemzyklus aufweist.

Im Kontext der Erfindung kann eine "Bewegungscharakteristik einer menschlichen Atmung" insbesondere gekennzeichnet sein durch zumindest eines von einer Atmungsfrequenz, einem Atmungshub und einer Atmungsanordnung, beispielsweise in einem Bauchbereich und/oder einem Brustbereich. Die Bewegungscharakteristik kann eine menschliche Atmung nachbilden, soweit sie von außen sichtbar oder erkennbar ist. Sie kann durch ein Atmungsprofil gekennzeichnet sein, welches Atmungsfrequenz und/oder Atmungshub in Abhängigkeit von zumindest zwei Positionen im Brust- und/oder Bauchbereich angibt, insbesondere von zumindest fünf Positionen, insbesondere von zumindest zehn Positionen. Die Bewegungscharakteristik kann indikativ sein für zumindest eines von einem Schlafzustand, insbesondere einem Tiefschlafzustand und einem Zustand leichten Schlafs, einem Aufwachzustand, einem Einschlafzustand und einem Wachzustand. Alternativ oder zusätzlich kann sie indikativ sein für zumindest eines von einem Neugeborenen, einem Baby, einem Kleinkind, einem Kind, einem Jugendlichem und einem Erwachsenen.

Gemäß einer Ausführungsform kann mithilfe der Dummy-Vorrichtung die Funktion eines Testsystems, beispielsweise eines Assistenzsystems im Automobilbereich, realitätsnah getestet werden. Dafür kann die Dummy-Vorrichtung tatsächliche Objekte, beispielsweise Insassen in einem Kraftfahrzeug, realitätsnah abbilden, insbesondere derart abbilden, dass sie von dem Testsystem als Objekte eines bestimmten Typs und/oder als Objekte in einem bestimmten Zustand erkannt werden. Zum Beispiel kann überprüft werden, ob die Testsysteme verschiedene Parameter einer simulierten Atmung des Test-Dummys erkennen können, etwa eine Atmungsfrequenz und/oder einen Atmungshub. Bei geeigneter Konfiguration des Dummys lässt sich daraus schlussfolgern, dass das Testsystem diese Parameter auch bei einer tatsächlichen Person erkennen kann. Weiterhin kann überprüft werden, ob das Testsystem bestimmte Bewegungscharakteristiken identifizieren kann, wobei die Bewegungscharakteristiken indikativ sein können für bestimmte mit der Atmung korrelierte Zustände von Personen, beispielsweise ein Schlafzustand oder ein Wachzustand, und/oder indikativ sein können für bestimmte Typen von Personen, beispielsweise ein Baby, ein Kleinkind oder einen Erwachsenen. Dummy-Vorrichtungen können zum Einsatz kommen, wenn Tests mit realen Personen beispielsweise aufgrund des erforderlichen Zeitaufwands für die Testpersonen zu kostspielig sind und/oder aufgrund einer Gefährdungssituation nicht möglich sind, etwa bei Crashtests.

Gemäß einer Ausführungsform überdeckt das Atmungs-Simulationselement einen Bauchbereich des Rumpfelements und einen Brustbereich des Rumpfelements jeweils zumindest teilweise. Bauch- und Brustbereich des Rumpfelements können analog zu diesen Bereichen bei einer realen Person angeordnet sein. Der Brustbereich oder Thoraxbereich kann einen unterhalb eines Kopfs der Dummy-Vorrichtung angeordneten Bereich des Rumpfelements umfassen. Der Brustbereich kann einen oberen Brustbereich in Kopfnähe und einen unteren an den Bauch angrenzenden Brustbereich aufweisen. Der Bauchbereich kann einen mittleren Bereich des Rumpfelements zwischen Brustbereich und Hüftbereich umfassen. Der Hüftbereich kann einen dem Kopf gegenüberliegenden Bereich des Rumpfelements umfassen. Eine solche Ausführungsform kann vorteilhaft sein, um die Atmungsbewegung einer Person realistisch zu simulieren, weil Atmungsbewegungen typischerweise eine Bewegung sowohl des Bauchs, insbesondere der Bauchdecke, als auch der Brust, insbesondere des Brustkorbs, umfassen.

Gemäß einer weiteren Ausführungsform ist das Antriebselement in dem Bauchbereich angeordnet, so dass ein Atmungshub in dem Bauchbereich größer ist als ein Atmungshub in dem Brustbereich, insbesondere mindestens zweimal oder mindestens dreimal so groß. Beispielsweise kann ein maximaler Atmungshub im Bauchbereich größer sein als ein maximaler Atmungshub im Brustbereich, insbesondere mindestens zweimal oder mindestens dreimal so groß. Eine solche Ausführungsform kann vorteilhaft sein, um die Atmung verschiedener Personentypen realitätsnah zu simulieren. Ein besonders starke Atembewegung im Bauchbereich verglichen mit dem Brustbereich kann charakteristisch für Neugeborene, Babys oder Kleinkinder sein.

Der Atmungshub eines Erwachsenen kann in einem abdominalen Bereich oder Bauchbereich 7 mm, in einem unteren Brustbereich 4 mm und/oder in einem oberen Brustbereich 3 mm sein. Der Atmungshub eines 6 bis 7 Jahre alten Kinds kann in einem Bauchbereich 7 mm, in einem unteren Brustbereich 4 mm und/oder in einem oberen Brustbereich 3 mm sein. Der Atmungshub eines 2 Jahre alten Kleinkinds kann in einem Bauchbereich 7 mm, in einem unteren Brustbereich 4 mm und/oder in einem oberen Brustbereich 3 mm sein. Der Atmungshub eines 9 bis 12 Monate alten Babys kann in einem Bauchbereich 3,5 mm, in einem unteren Brustbereich 2 mm und/oder in einem oberen Brustbereich 1,5 mm sein. Der Atmungshub eines 0 bis 3 Monate alten Neugeborenen kann in einem Bauchbereich 3,5 mm, in einem unteren Brustbereich 3 mm und/oder in einem oberen Brustbereich 0 mm sein.

Gemäß einer weiteren Ausführungsform kann ein Verhältnis eines Atmungshubs in dem Brustbereich zu einem Atmungshub in dem Bauchbereich einstellbar sein, beispielsweise durch verschiedene Ausformungen des Atmungs-Simulationselements, etwa dessen Elastizität, und/oder durch ein weiteres Antriebselement, beispielsweise einen weiteren Stößel oder einen weiteren Luftsack. Zusätzlich oder alternativ kann ein Atmungshub in einem oberen Brustbereich im Verhältnis zu einem Atmungshub in einem unteren Brustbereich einstellbar sein. Beispielsweise kann keine oder nur eine geringe Atembewegung in dem oberen Brustbereich erfolgen, insbesondere um die Atmung eines Neugeborenen zu simulieren.

Gemäß einer weiteren Ausführungsform weist die Dummy-Vorrichtung ein weiteres Antriebselement auf, beispielsweise einen weiteren Stößel oder einen weiteren Luftsack. Das weitere Antriebselement kann eingerichtet sein, das Atmungs-Simulationselement und/oder ein weiteres Atmungs-Simulationselement sequenziell von dem Rumpfelement weg und zu dem Rumpfelement hin mit der Atmungsfrequenz oder einer weiteren Atmungsfrequenz zu bewegen, um eine Bewegungscharakteristik einer menschlichen Atmung nachzubilden. Das weitere Atmungs-Simulationselement kann ähnliche Eigenschaften haben wie das Atmungs-Simulationselement. Das weitere Antriebselement kann ähnliche Eigenschaften haben wie das Antriebselement. Das weitere Antriebselement kann versetzt zu dem Antriebselement an dem Rumpfelement angeordnet sein. Beispielsweise kann das Antriebselement in einem Bauchbereich angeordnet sein und das weitere Antriebselement in einem Brustbereich angeordnet sein oder umgekehrt.

Gemäß einer weiteren Ausführungsform weist die Dummy-Vorrichtung einen Atmungssimulations-Aktuator auf, welcher eingerichtet ist, das Antriebselement anzutreiben, sowie einen weiteren Atmungssimulations-Aktuator, welcher eingerichtet ist, das weitere Antriebselement anzutreiben. Die beiden Aktuatoren können unabhängig voneinander steuerbar sein, insbesondere mittels einer Steuereinrichtung. Zusätzlich oder alternativ können sie abhängig voneinander steuerbar sein, beispielsweise mit derselben Frequenz und/oder durch einen aufeinander abgestimmten Atmungshub. Mittels der beiden Aktuatoren kann ein Weg des Bauches und/oder ein Weg der Brust einstellbar sein.

Gemäß einer weiteren Ausführungsform ist eine Atmungsfrequenz mittels des Antriebselements steuerbar. Eine solche Atmungsfrequenz kann indikativ für eine simulierte Person sein, beispielsweise ein Neugeborenes, ein Baby, ein Kleinkind, ein Kind, einen Jugendlichen oder einen Erwachsenen. Die Atmungsfrequenz eines Erwachsenen kann ungefähr 12 Atmungen pro Minute betragen. Die Atmungsfrequenz eines 6 bis 7 Jahre alten Kinds kann 18 Atmungen pro Minute betragen. Die Atmungsfrequenz eines 2 Jahre alten Kleinkinds kann 22 Atmungen pro Minute betragen. Die Atmungsfrequenz eines 9 bis 12 Monate alten Babys kann 30 Atmungen pro Minute sein. Die Atmungsfrequenz im Schlaf kann geringer sein als in einem Wachzustand.

Gemäß einer weiteren Ausführungsform weist das Antriebselement auf zumindest eines von einem Stößel, insbesondere einem Stößel mit einem plattenförmigen Abschlussteil, welches gegen das Atmungs-Simulationselement drückt, und einem aufblasbaren Balg, einem aufblasbaren Luftsack oder einer aufblasbaren Luftblase, beispielsweise einem einkammerigen oder einem mehrkammerigen Balg, Luftsack oder Luftblase. Eine Kammer eines solchen mehrkammerigen Balgs, Luftsacks oder Luftblase kann in einem Brustbereich und eine weitere Kammer in einem Bauchbereich angeordnet sein, insbesondere um ein Verhältnis der Brust- zur Bauchatmung zu steuern.

Gemäß einer weiteren Ausführungsform weist die Dummy-Vorrichtung ferner auf einen Kompressor, welcher eingerichtet ist, ein Gas, insbesondere Luft, in den aufblasbaren Luftsack und/oder aus dem aufblasbaren Luftsack zu pumpen. Weiterhin kann die Dummy-Vorrichtung einen Gastank oder Gasbehälter, insbesondere einen Luftbehälter, aufweisen, aus welchem und/oder in welchen der Kompressor das Gas in den Luftsack bzw. aus dem Luftsack pumpt. Kompressor und/oder Gastank können in einem nachgebildeten Rumpf eines Menschen angeordnet sein. Alternativ können Kompressor und/oder Gastank außerhalb eines nachgebildeten Rumpfs angeordnet sein, insbesondere außerhalb einer nachgebildeten Person. Kompressor und/oder Gastank können, müssen aber nicht zwischen Rumpfelement und Atmungs-Simulationselement angeordnet sein. Kompressor und/oder Gastank können an dem Rumpfelement befestigt sein. Alternativ können Kompressor und/oder Gastank nur durch einen Luftschlauch oder eine Vielzahl von Luftschläuchen mit dem Rumpfelement und dem Atmungs-Simulationselement verbunden sein, wobei der oder die Luftschläuche eingerichtet sein können, Gas zwischen dem Atmungs-Simulationselement und dem Kompressor und/oder dem Gastank zu transportieren.

Gemäß einer weiteren Ausführungsform weist das Antriebselement einen Atmungssimulations-Aktuator auf, der die Bewegung des Atmungssimulations-Elements antreibt. Der Atmungssimulations-Aktuator kann durch eine Steuereinrichtung gesteuert werden. Ein solcher Atmungssimulations-Aktuator kann beispielsweise eingerichtet sein, einen Stößel vor und zurück zu bewegen, beispielsweise in einer linearen Bewegung entlang der Stößelachse. Der Atmungssimulations-Aktuator kann eingerichtet sein, einen Balg oder Luftsack aufzublasen und/oder zu entleeren, wobei das Entleeren durch eine elastische Rückstellkraft des Atmungs-Simulationselements erfolgen oder zumindest unterstützt sein kann. Die Signalübertragung zwischen der Steuereinrichtung und dem Atmungssimulations-Aktuator kann mittels einer Funkübertragung und/oder mittels eines Kabels erfolgen. Die Steuerung kann über Ethernet erfolgen. Befehle, insbesondere Steuerungsbefehle, können mittels eines User Data Protocol (UDP) übertragen werden.

Gemäß einer weiteren Ausführungsform weist das Antriebselement ein Abschlussteil auf, welches gegen das Atmungs-Simulationselement drückt, wobei sich das Abschlussteil zumindest teilweise in eine Aussparung des Atmungs-Simulationselements erstreckt. Die Aussparung kann ein Loch in dem Atmungs-Simulationselement sein. Das Loch kann mit einem Atmungsschlitz in dem Atmungs-Simulationselement verbunden sein, insbesondere in diesen Atmungsschlitz übergehen. Die Aussparung kann der Atmungsschlitz sein. Ein Umriss der Aussparung kann einer Ausformung des Abschlussteils entsprechen. Das Abschlussteil kann die Spitze des Antriebselements bilden. Das Abschlussteil kann derart angeordnet sein, dass es nicht über eine äußere Oberfläche des Atmungs-Simulationselements hinausragt. Eine solche Ausführungsform kann vorteilhaft sein, um eine genaue Positionierung des Antriebselements in Bezug auf das Atmungs-Simulationselement sicherzustellen.

Gemäß einer weiteren Ausführungsform verjüngt sich das Abschlussteil mit zunehmender Entfernung von dem Rumpfelement. Insbesondere kann das Abschlussteil aufweisen zumindest eines von einer konischen Spitze, insbesondere einer frustokonischen Spitze, einer gewölbten Spitze und einer kugelförmigen Spitze. Das Antriebselement einschließlich des Abschlussteils kann pilzförmig ausgebildet sein, wobei das Abschlussteil dem Hut des Pilzes entspricht. Eine solche Ausführungsform kann vorteilhaft sein, um eine genaue Positionierung des Antriebselements in Bezug auf das Atmungs-Simulationselement zu gewährleisten. Insbesondere wenn eine Aussparung, in welche das Abschlussteil hineinreicht, mit einem Atmungsschlitz verbunden ist, kann eine derartige Ausführungsform auch dazu beitragen, dass der Atmungsschlitz geweitet wird, wenn das Antriebselement von dem Rumpfelement wegbewegt wird. Dadurch kann eine besonders realistische Atmungsbewegung simulierbar sein.

Gemäß einer weiteren Ausführungsform weist das Atmungs-Simulationselement eine Vielzahl von Rippen auf. So kann das Atmungs-Simulationselement, insbesondere wenn es plattenförmig ist, durch entsprechende Schlitze in eine Vielzahl von Rippen unterteilt sein. Die Rippen können in eine beliebige Richtung angeordnet sein, beispielsweise analog zu menschlichen Rippen. Sie können aber auch entlang einer Längsachse des simulierten menschlichen Rumpfes angeordnet sein, insbesondere einer Achse, die vom Schulterbereich zum Hüftbereich gerichtet ist. Die Rippen können entlang einer Haupterstreckungsachse des Atmungs-Simulationselements angeordnet sein und/oder senkrecht dazu. Die Rippen können in einem Brust- und/oder Bauchbereich angeordnet sein. Die Vielzahl von Rippen kann zwei, drei, vier, fünf, mehr als fünf oder mehr als zehn Rippen umfassen. Durch die Aufteilung des Atmungs-Simulationselements in Rippen kann eine Atembewegung besonders realistisch simulierbar sein, beispielsweise auch eine seitliche Ausdehnung von Bauch und Brust.

Gemäß einer weiteren Ausführungsform ist das Abschlussteil bogenförmig ausgebildet. Eine solche Ausführungsform kann vorteilhaft in Bezug auf eine gleichmäßigere Druckverteilung durch das Antriebselement auf das Atmungs-Simulationselement sein. Wenn das Atmungs-Simulationselement eine Vielzahl von Rippen aufweist, kann sich der Bogen orthogonal zu den Rippen erstrecken. Dadurch kann es möglich sein, die durch das Antriebselement ausgeübte Kraft geeignet auf die Rippen zu verteilen.

Gemäß einer weiteren Ausführungsform weist das Atmungs-Simulationselement eine Vielzahl von Rippen auf und weist das Antriebselement ein bogenförmiges Abschlussteil auf, welches gegen die Rippen drückt. Eine solche Ausführungsform kann vorteilhaft sein, um die durch das Antriebselement ausgeübte Kraft geeignet auf die Rippen zu verteilen.

Gemäß einer weiteren Ausführungsform weist das Atmungs-Simulationselement auf zumindest eines von einer Rippe, insbesondere einer Vielzahl von Rippen, einer Membran, beispielsweise einer elastischen Membran, und einer Platte, insbesondere einer flexiblen Platte. Die Membran oder Platte kann zwischen verschiedenen Bereichen des Rumpfelements aufgespannt sein, insbesondere zwischen einem Schulterbereich und einem Hüftbereich, und/oder von dem Antriebselement gestützt werden. Das Atmungs-Simulationselement kann an dem Rumpfelement befestigt sein, insbesondere in einem Schulterbereich des Rumpfelements und/oder in einem Hüftbereich des Rumpfelements. Das Atmungs-Simulationselement kann bestehen aus oder aufweisen eine Außenhülle der Dummy-Vorrichtung, insbesondere in einem Bauch- und/oder Brustbereich, beispielsweise eine Außenhülle, die eine Haut oder eine Kleidung des Baby-Dummys nachbildet. Das Atmungs-Simulationselement kann die Außenhülle zusätzlich zu den Rippen, der Platte und/oder der Membran aufweisen. Eine solche Ausführungsform kann vorteilhaft sein, um die Atembewegung im Bauch- und Brustbereich realistisch nachzubilden.

Gemäß einer weiteren Ausführungsform weist das Atmungs-Simulationselement eine Dicke oder Wandstärke zwischen 1 und 10 mm auf. Die Dicke kann eine Dicke der flexiblen Platte, der Membran und/oder zumindest einer der Vielzahl von Rippen, insbesondere aller Rippen, sein. Die Dicke kann im Wesentlichen parallel zur Bewegungsrichtung des Stößels definiert sein.

Gemäß einer weiteren Ausführungsform weist ein Material des Atmungs-Simulationselements ein Elastizitätsmodul zwischen 200 und 1400 MPa auf. Im Kontext der Erfindung, kann ein "Elastizitätsmodul" insbesondere bedeuten einen Materialkennwert, welcher den Zusammenhang zwischen Spannung und Dehnung bei der Verformung eines festen Körpers bei linear elastischem Verhalten beschreibt. Das Elastizitätsmodul eines Materials kann diejenige Zugspannung beschreiben, bei welcher sich ein Zugstab aus diesem Material in der Länge verdoppelt. Ein Material mit einem solchen Elastizitätsmodul kann vorteilhaft sein, um eine menschliche Atmung realistisch zu simulieren. Das Material des Atmungs-Simulationselements kann Kunststoff sein oder aufweisen.

Gemäß einer weiteren Ausführungsform weist das Atmungs-Simulationselement einen Atmungsschlitz auf, der sich weitet, insbesondere breiter wird, wenn das Atmungs-Simulationselement durch das Antriebselement von dem Rumpfelement wegbewegt wird. Der Atmungsschlitz kann sich verengen, wenn das Atmungs-Simulationselement zu dem Rumpfelement hinbewegt wird. Das Verengen des Atmungsschlitzes kann durch die Elastizität eines Materials des Atmungs-Simulationselements erreicht werden. Der Atmungsschlitz kann sich in eine beliebige Richtung erstrecken. Beispielsweise kann er entlang einer Längsachse des Rumpfs ausgerichtet sein. Eine solche Längsachse kann sich vom Schulterbereich zum Hüftbereich erstrecken. Der Atmungsschlitz kann mittig in dem Atmungs-Simulationselement angeordnet sein, insbesondere derart, dass er die Platte in zwei gleiche Hälften teilt. Durch die Erweiterung des Atmungsschlitzes kann es möglich sein, die Hälften des Atmungs-Simulationselements ein wenig zur Seite zu bewegen. Die Erweiterung des Schlitzes kann durch ein konisches oder kugelförmiges Abschlussteil eines Stößels erreicht oder unterstützt werden. Durch eine solche Ausführungsform kann eine besonders natürliche Atembewegung realisierbar sein.

Gemäß einer weiteren Ausführungsform ist das Atmungs-Simulationselement mittels eines Befestigungselements, insbesondere mittels einer Vielzahl von Befestigungselementen, an dem Rumpfelement befestigt. Die Befestigungselemente können in einem Schulterbereich und/oder einem Hüftbereich angeordnet sein. Zumindest eins der Befestigungselemente kann in einer Schiene und/oder einem Schlitz beweglich angeordnet sein. Beispielsweise kann das Atmungs-Simulationselement den Schlitz und/oder die Schiene aufweisen. Alternativ oder zusätzlich kann das Rumpfelement den Schlitz und/oder die Schiene aufweisen. Der Schlitz und/oder die Schiene kann eine beschränkte Beweglichkeit ermöglichen, beispielsweise entlang nur einer Bewegungsrichtung und/oder nur über eine vorgegebene Länge der Schiene oder des Schlitzes. Eine solche Befestigung kann eine verbesserte bewegliche Befestigung des Atmungs-Simulationselements an dem Rumpfelement gewährleisten, beispielsweise zur realistischeren Simulation einer Atmung.

Gemäß einer weiteren Ausführungsform weist die Dummy-Vorrichtung ferner auf ein Gliedmaßenelement, das mit dem Rumpfelement mittels eines Gelenks beweglich verbunden ist, und ein Gliedmaßen-Antriebselement, welches eingerichtet ist, das Gliedmaßenelement um das Gelenk derart zu bewegen, dass eine weitere Bewegungscharakteristik einer menschlichen Gliedmaßenbewegung nachgebildet wird. Das Gelenk kann ein Drehgelenk oder ein Kugelgelenk sein. Das Gelenk kann mehrere Drehpunkte aufweisen, insbesondere zwei oder drei.

Mittels des Gliedmaßenelements kann ein Arm oder ein Bein simulierbar sein. Die Dummy-Vorrichtung kann eine Vielzahl von Gliedmaßenelementen aufweisen, beispielsweise zwei, drei, vier, fünf oder mehr als fünf. Diese können einen ähnlichen Aufbau oder einen unterschiedlichen Aufbau haben. Mittels des Gliedmaßenelements können Bewegungscharakteristiken einer Armbewegung und/oder einer Beinbewegung simulierbar sein.

Das Gliedmaßen-Antriebselement kann einen Gliedmaßen-Aktuator aufweisen, beispielsweise einen Elektromotor, insbesondere einen Linearmotor oder einen Servomotor. Der Gliedmaßen-Aktuator kann eingerichtet sein, die Gliedmaßenbewegung anzutreiben. Eine Steuereinrichtung kann eingerichtet sein, den Gliedmaßen-Aktuator zu steuern. Die Steuereinrichtung kann auf dem Rumpfelement angeordnet sein oder auch außerhalb der Dummy-Vorrichtung angeordnet sein. Signale der Steuereinrichtung können über Kabel und/oder Funk übertragen werden.

Die weitere Bewegungscharakteristik kann gekennzeichnet sein durch zumindest eines von einem Drehwinkel des Gliedmaßenelements, einer Amplitude der Gliedmaßenbewegung, einer Frequenz von Gliedmaßenbewegungen, einer relativen Bewegung von verschiedenen Teilen des Gliedmaßenelements zueinander und einer zeitlichen Verteilung von Gliedmaßenbewegungen in einem vorgegebenen Zeitraum.

Eine solche Ausführungsform kann vorteilhaft sein, weil die weitere Bewegungscharakteristik insbesondere in Kombination mit der Bewegungscharakteristik Rückschlüsse auf einen Zustand der Dummy-Vorrichtung und/oder einen Zustand der durch die Dummy-Vorrichtung simulierten Person ermöglichen kann.

Gemäß einer weiteren Ausführungsform sind die Bewegungscharakteristik und/oder die weitere Bewegungscharakteristik indikativ für zumindest eines von einem Schlafzustand und einem Wachzustand, insbesondere für zumindest eines von einem Tiefschlafzustand, einem Zustand leichten Schlafs, einem Aufwachzustand, einem Einschlafzustand und einem Wachzustand. Beispielsweise kann in einem Schlafzustand die Atmungsfrequenz und/oder der Atmungshub kleiner sein als in einem Wachzustand.

Ein Tiefschlafzustand, insbesondere eines Neugeborenen oder eines Babys, kann dadurch gekennzeichnet sein, dass nur eine Atmungsbewegung, aber keine Gliedmaßenbewegung erfolgt. Ein Zustand leichten Schlafs, insbesondere eines Neugeborenen oder eines Babys, kann dadurch gekennzeichnet sein, dass eine Atmungsbewegung und eine irreguläre, geringe Gliedmaßenbewegung erfolgen. Ein Aufwachzustand, insbesondere eines Neugeborenen oder eines Babys, kann dadurch gekennzeichnet sein, dass eine Atmungsbewegung und eine irreguläre, langsame Gliedmaßenbewegung erfolgt. Ein Wachzustand, insbesondere eines Neugeborenen oder eines Babys, kann dadurch gekennzeichnet sein, dass eine Atmungsbewegung und eine irreguläre, schnelle Gliedmaßenbewegung erfolgt.

Eine solche Ausführungsform kann vorteilhaft sein zur Simulation der genannten Zustände, insbesondere um die Funktionalität von Assistenzsystemen zu testen, die in der Lage sein sollen, entsprechende Zustände von realen Personen, insbesondere von Neugeborenen oder Babys, zu erkennen.

Gemäß einer weiteren Ausführungsform ist die Bewegungscharakteristik und/oder die weitere Bewegungscharakteristik indikativ für (die Atmung und/oder Gliedmaßenbewegung) zumindest eines von einem Neugeborenen, einem Baby, einem Kleinkind, einem Kind, einem Jugendlichem und einem Erwachsenen. Beispielsweise kann die Atmungsfrequenz, insbesondere eine Atmungsfrequenz in Ruhe, im Laufe des Lebens abnehmen und/oder der Atmungshub bezogen auf die Körpergröße kann im Laufe des Lebens abnehmen. Weiterhin kann die Gliedmaßenbewegung im Laufe des Lebens zielgerichteter oder koordinierter werden.

Eine solche Ausführungsform kann vorteilhaft sein, um verschiedene Personentypen zu simulieren, insbesondere um die Funktionalität von Assistenzsystemen zu testen, die in der Lage sein sollen, derartige Personentypen voneinander zu unterscheiden, beispielsweise ein Neugeborenes von einem einjährigen Baby. Dies kann sinnvoll sein, weil für ein Neugeborenes anderer Sicherheitsvorrichtungen erforderlich sein können als für ein einjähriges Baby.

Gemäß einer weiteren Ausführungsform ist das Gliedmaßen-Antriebselement eingerichtet, das Gliedmaßenelement irregulär um das Gelenk zu bewegen, insbesondere (statistisch) unabhängig von der Bewegung des Atmungs-Simulationselements. Eine "irreguläre" Bewegung kann dadurch gekennzeichnet sein, dass Bewegungsumfang und/oder Bewegungsrichtung aufeinanderfolgender Bewegungsabläufe erheblich voneinander abweichen. Alternativ oder zusätzlich kann eine irreguläre Bewegung dadurch gekennzeichnet sein, dass eine große Bandbreite unterschiedlicher Bewegungsrichtungen und oder unterschiedlicher Bewegungsumfänge realisiert ist. Eine irreguläre Bewegung kann dadurch gekennzeichnet sein, dass der Zeitpunkt der Bewegung zufällig ist. Eine irreguläre Bewegung kann dadurch gekennzeichnet sein, dass sie nicht zielgerichtet ist, beispielsweise im Gegensatz zu einer gezielten Greifbewegung. Eine irreguläre Bewegung kann dadurch gekennzeichnet sein, dass sie (statistisch) unabhängig von der Atmungsbewegung erfolgt.

Eine solche Ausführungsform kann vorteilhaft sein, weil Schlafbewegungen (auch von Erwachsenen) irregulär sein können und/oder weil Bewegungen von Neugeborenen oder Babys irregulär sein können. Entsprechend können irreguläre Bewegungen indikativ für derartige Zustände sein.

Gemäß einer weiteren Ausführungsform ist das Gliedmaßen-Antriebselement eingerichtet, das Gliedmaßenelement in Abhängigkeit von der Bewegung des Atmungs-Simulationselements zu bewegen. Eine solche Ausführungsform kann vorteilhaft sein, um Zustände zu simulieren, bei denen Atmungsbewegung und Gliedmaßenbewegung korrelieren, beispielsweise aufgrund einer mechanischen Verbindung über Knochen, Muskeln, Sehnen oder dergleichen.

Gemäß einer weiteren Ausführungsform ist das Gliedmaßenelement an das Atmungssimulations-Element und/oder das Antriebselement mechanisch gekoppelt, insbesondere mittels des Gliedmaßen-Antriebselements. Eine mechanische Kopplung kann beispielsweise durch ein Gelenk, ein Verbindungsstück oder einen Faden erzeugt werden. Durch eine derartige Kopplung kann ein eigenständiger Aktuator für das Gliedmaßenelement verzichtbar sein. Weiterhin kann durch eine solche Kopplung eine Abhängigkeit der Atmungsbewegung und der Gliedmaßenbewegung auf einfache Weise erzeugbar sein.

Gemäß einer weiteren Ausführungsform weist das Gliedmaßenelement auf ein rumpfnahes Glied, welches an einem ersten Gliedende mittels des Gelenks mit dem Rumpfelement beweglich verbunden ist, und ein rumpffernes Glied, welches mit dem rumpfnahen Glied an einem zweiten Gliedende des rumpfnahen Glieds, welches dem ersten Gliedende gegenüberliegt, mittels eines weiteren Gelenks beweglich verbunden ist. Eine solche Ausführungsform kann vorteilhaft sein, um Bewegungsabläufe von Gliedmaßen, beispielsweise eines Arms oder eines Beins, realistisch darstellen zu können, insbesondere um eine Unterschenkelbewegung um ein Kniegelenk oder eine Unterarmbewegung um ein Ellbogengelenk simulieren zu können. Das weitere Gelenk kann ein Drehgelenk oder ein Kugelgelenk sein. Es kann mehrere Drehpunkte aufweisen, insbesondere zwei oder drei. Ein Aktuator kann eingerichtet sein, das rumpfnahe Glied anzutreiben, wobei das rumpfferne Glied nur mittelbar angetrieben wird.

Gemäß einer weiteren Ausführungsform weist das rumpfnahe Glied auf ein erstes Gliedteil, welches einen ersten Drehpunkt des Gelenks mit einem ersten weiteren Drehpunkt des weiteren Gelenks verbindet, und ein zweites Gliedteil, welches einen zweiten Drehpunkt des Gelenks mit einem zweiten weiteren Drehpunkt des weiteren Gelenks verbindet.

Der erste Drehpunkt und der zweite Drehpunkt können zueinander räumlich versetzt sein. Beide Drehpunkte können am Rumpfelement angeordnet sein. Das Gliedmaßen-Antriebselement kann eingerichtet sein, das erste Gliedteil um den ersten Drehpunkt des Gelenks zu bewegen. Die Bewegung des zweiten Gliedteils um den zweiten Drehpunkt kann in Abhängigkeit erfolgen. Der erste weitere Drehpunkt und der zweite weitere Drehpunkt können räumlich versetzt an dem rumpffernen Glied angeordnet sein. Die Bewegung des rumpffernen Glieds kann in Abhängigkeit von der Bewegung des ersten Gliedteils um den ersten Drehpunkt erfolgen.

Eine solche Ausführungsform kann vorteilhaft sein, um ein Abwinkeln des rumpffernen Glieds in Bezug auf das rumpfnahe Glied im Rahmen einer weiteren Bewegungscharakteristik nachzubilden. Ein derartiges Abwinkeln kann charakteristisch für bestimmte Zustände einer simulierten Person sein, beispielsweise für einen Schlafzustand eines Babys. Durch die beiden Gliedteile und die versetzte Anordnung kann ein Abknicken zwischen rumpfnahem und rumpffernem Glied steuerbar sein. Insofern kann ein eigener Aktuator für das rumpfferne Glied verzichtbar sein.

Gemäß einer weiteren Ausführungsform weist die Dummy-Vorrichtung ein Kopfelement auf, welches mit dem Rumpfelement mittels eines Halsgelenks drehbar verbunden ist. Die Bewegung des Kopfelements kann durch einen Kopfaktuator antreibbar sein. Eine durch die Bewegung des Kopfelements nachgebildete Kopfbewegungscharakteristik kann indikativ sein für zumindest eines von einem Tiefschlafzustand, einem Zustand leichten Schlafs, einem Aufwachzustand, einem Einschlafzustand und einem Wachzustand. Alternativ oder zusätzlich kann die Kopfbewegungscharakteristik indikativ sein für zumindest eines von einem Neugeborenen, einem Baby, einem Kleinkind, einem Kind, einem Jugendlichem und einem Erwachsenen.

Gemäß einer weiteren Ausführungsform ist ein Herzschlag und/oder ein Puls simulierbar, wobei Herzschlag und/oder Puls in Abhängigkeit von der Atmungsbewegung erfolgen können.

Gemäß einer weiteren Ausführungsform sind das Rumpfelement und das Atmungs-Simulationselement zumindest teilweise in einer viskosen Substanz eingebettet. Die gesamte Dummy-Vorrichtung kann in der viskosen Substanz eingebettet sein. Die viskose Substanz kann elastisch und/oder biegsam sein. Eine Atembewegung und/oder Gliedmaßenbewegung kann mittels der viskosen Substanz nachbildbar sein. Das Atmungs-Simulationselement, das Gliedmaßenelement und/oder das Kopfelement können, müssen aber nicht jeweilige, räumlich benachbarte Bereiche der viskosen Substanz umfassen. Die viskose Substanz kann eingerichtet sein, ein einfallendes Signal zumindest teilweise zu reflektieren. Die viskose Substanz kann vorteilhaft sein, um die Form und/oder Stofflichkeit einer nachzubildenden Person realistisch zu simulieren.

Gemäß einer weiteren Ausführungsform weist ein Test-System die Dummy-Vorrichtung auf. Zudem weist das Test-System einen Sender auf, der konfiguriert ist, Signalwellen zu senden, wobei die Dummy-Vorrichtung konfiguriert ist, das gesendete Signal zu reflektieren. Ferner weist das Test-System einen Empfänger auf, der konfiguriert ist, das reflektierte Signal zu empfangen sowie eine Signalverarbeitungseinheit, die konfiguriert ist, das empfangene Signal zu analysieren und einen Zustand der Dummy-Vorrichtung zu erkennen.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine perspektivische Darstellung einer Dummy-Vorrichtung gemäß einer Ausführungsform der vorliegenden Erfindung,
Fig. 2 ein Atmungs-Simulationselement gemäß einer Ausführungsform der vorliegenden Erfindung,
Fig. 3 eine perspektivische Darstellung einer Dummy-Vorrichtung mit Atmungsschlitz gemäß einer Ausführungsform der vorliegenden Erfindung und
Fig. 4 bis 6 Querschnitte verschiedener Ausformungen von Antriebselementen gemäß Ausführungsformen der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

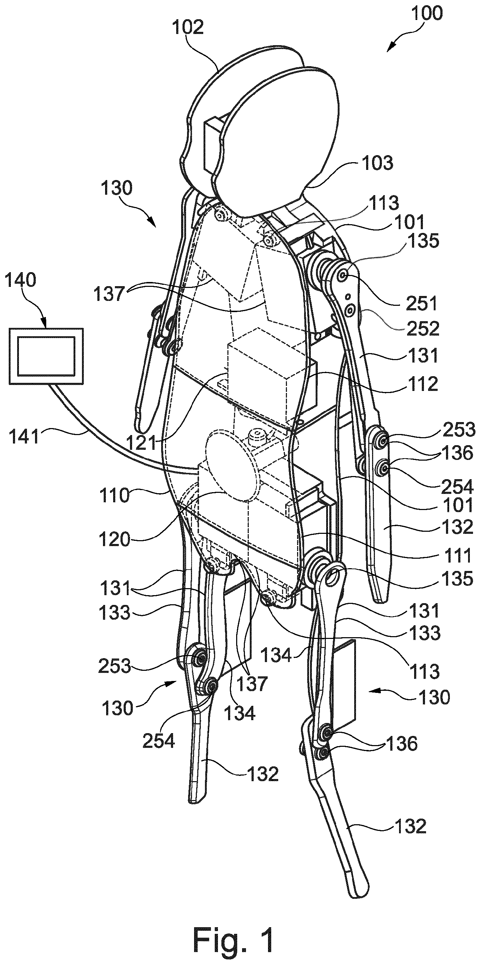

**Figur 1** zeigt eine perspektivische Ansicht einer Dummy-Vorrichtung 100. Die Dummy-Vorrichtung 100 weist auf (i) ein Rumpfelement 101, welches einen Rumpf eines Menschen nachbildet, (ii) ein Atmungs-Simulationselement 110, welches das Rumpfelement 101 zumindest teilweise überdeckt und welches beweglich in Bezug auf das Rumpfelement 101 angeordnet ist und (iii) ein Antriebselement 120, welches eingerichtet ist, das Atmungs-Simulationselement 110 sequenziell von dem Rumpfelement 101 weg und zu dem Rumpfelement 101 hin mit einer Atmungsfrequenz zu bewegen, um eine Bewegungscharakteristik einer menschlichen Atmung nachzubilden.

Das Atmungs-Simulationselement 110 ist in einen Bauchbereich 111 und einen Brustbereich 112 aufgeteilt, wobei das Antriebselement 120 im Bauchbereich 111 angeordnet ist. Weiter ist das Atmungs-Simulationselement 110 mittels Befestigungen 113, hier mittels Verschraubungen, an dem Rumpfelement befestigt. Die Befestigungen 113 befinden sich in einem Halsbereich und einem Hüftbereich der Dummy-Vorrichtung 100.

Das Antriebselement 120 ist zwischen dem Atmungs-Simulationselement 110 und dem Rumpfelement 101 angeordnet. Das Antriebselement 120 weist einen zylinderförmigen Stößel auf, der in eine kreisförmige Platte mündet, welche von unten gegen das Atmungs-Simulationselement 110 drückt. Weiterhin weist das Antriebselement 120 einen Atmungssimulations-Aktuator 121 auf, der am Rumpfelement 101 angeordnet ist und den Stößel hin und her bewegen kann.

Ein Kopfelement 102 ist oberhalb des Rumpfelements 101, insbesondere oberhalb eines Schulterbereichs der Dummy-Vorrichtung 100, angeordnet und mit dem Rumpfelement 101 über ein Halsgelenk 103 drehbar und/oder schwenkbar verbunden. Die Bewegung des Kopfelements 102 wird mittels eines Kopfaktuators angetrieben.

Zwei Gliedmaßenelemente 130 sind in einem Schulterbereich der Dummy-Vorrichtung 100 an dem Rumpfelement 101 mittels eines jeweiligen Gelenks 135 beweglich befestigt. Die beiden Gliedmaßenelemente 130 simulieren einen rechten und einen linken Arm. Die Gliedmaßenelemente 130 weisen jeweils ein rumpfnahes Glied 131 und ein rumpffernes Glied 132 auf, die mittels eines weiteren Gelenks 136 beweglich miteinander verbunden sind. Das rumpfnahe Glied 131 weist jeweils ein erstes Gliedteil 133 und ein zweites Gliedteil 134 auf.

Das erste Gliedteil 133 verbindet einen ersten Drehpunkt 251 des Gelenks 135 mit einem ersten weiteren Drehpunkt 253 des weiteren Gelenks 136. Das zweite Gliedteil 134 verbindet einen zweiten Drehpunkt 252 des Gelenks 135 mit einem zweiten weiteren Drehpunkt 254 des weiteren Gelenks 136. Der erste und der zweite Drehpunkt 251, 252 sind räumlich versetzt zueinander an dem Rumpfelement 101 angeordnet. Der erste und der zweite weitere Drehpunkt 253, 254 sind räumlich versetzt zueinander an dem rumpffernen Glied 132 angeordnet. Die verschiedenen Drehpunkte 251, 252, 253, 254 finden sich jeweils an Enden des rumpffernen Glieds 132 und des rumpfnahen Glieds 131 bzw. seiner Gliedteile 133, 134. Das Gliedmaßen-Antriebselement 137 steuert eine Drehbewegung des ersten Gliedteils 133 um den ersten Drehpunkt 251. Dadurch werden entsprechende Bewegungen um die anderen Drehpunkte 252, 253, 254 vorgegeben oder zumindest eingeschränkt. Das Gliedmaßen-Antriebselement 137 weist einen Gliedmaßen-Aktuator auf. Der Gliedmaßen-Aktuator ist an dem Rumpfelement 101 angeordnet und fest mit diesem verbunden.

Weiterhin sind zwei Gliedmaßenelemente 130 in einem Hüftbereich der Dummy-Vorrichtung 100 an dem Rumpfelement 101 mittels eines Gelenks 135 beweglich befestigt. Die beiden Gliedmaßenelemente 130 simulieren ein linkes Bein und ein rechtes Bein. Sie sind analog zu den zuvor geschilderten Gliedmaßenelementen 130 aufgebaut, die einen linken und einen rechten Arm simulieren.

Die Bewegung der Aktuatoren 121, 137 wird durch eine Steuereinrichtung 140 gesteuert, die mittels eines Signalleiters 141 mit der Dummy-Vorrichtung 100 verbunden ist. Die Steuereinrichtung 140 ist hier außerhalb der Dummy-Vorrichtung 100 angeordnet, kann aber auch in der Dummy-Vorrichtung 100 angeordnet sein, insbesondere an dem Rumpfelement 101. Jeder Aktuator 121, 137 kann eine eigene Steuereinrichtung 140 aufweisen, die in den Aktuator 121, 137 integriert sein kann und/oder außerhalb von dem Aktuator 121, 137 ausgebildet sein kann.

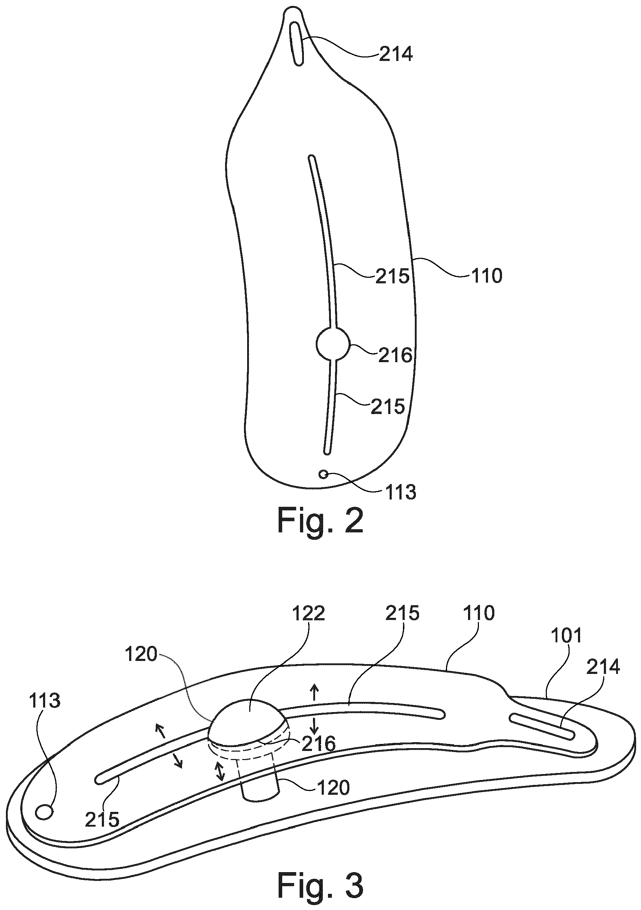

**Figur 2** zeigt ein plattenförmig ausgebildetes Atmungs-Simulationselement 110 mit einem mittig in dem Atmungs-Simulationselement 110 angeordneten Atmungsschlitz 215. Der Atmungsschlitz 215 erstreckt sich entlang einer Haupterstreckungsrichtung des Atmungs-Simulationselements 110, d.h. entlang einer Richtung, in welcher das Atmungs-Simulationselement 110 maximal ausgedehnt ist. Der Atmungsschlitz 215 erstreckt sich über einen Bauchbereich und einen Brustbereich des Rumpfes. In einem mittleren Bereich weitet sich der Atmungsschlitz 215 zu einer Aussparung 216, hier einem kreisförmigen Loch in dem Atmungs-Simulationselement 110.

An gegenüberliegenden Enden des Atmungs-Simulationselements 110 ist jeweils eine Befestigungsvorrichtung 113, 214 vorgesehen. An dem sich verjüngenden oberen Ende des Atmungs-Simulationselements 110, entsprechend einem Halsbereich, weist die Befestigungsvorrichtung einen Befestigungsschlitz 214 auf, so dass das Atmungs-Simulationselement 110 beweglich mit einem gewissen Spiel befestigt werden kann, beispielsweise an einem Rumpfelement.

**Figur 3** zeigt eine perspektivische Darstellung einer Dummy-Vorrichtung 100, in welcher das Atmungs-Simulationselement 110 aus Figur 2 an einem Rumpfelement 101 mittels der Befestigungsvorrichtungen 113, 214 befestigt ist. Ein Antriebselement 120 in Form eines Stößels ist an dem Rumpfelement 101 befestigt. Der Stößel 120 kann derart bewegt werden, dass das Atmungs-Simulationselement 110 sequenziell von dem Rumpfelement 101 weg und zu dem Rumpfelement 101 hin mit einer Atmungsfrequenz bewegt wird.

Der Stößel 120 weist an seinem vom Rumpfelement 101 abgewandten Ende, d.h. an seiner Spitze, ein Abschlussteil 122 auf, welches eine nach außen gerichtete Wölbung hat. Mit einem Teil dieser Wölbung erstreckt sich das Abschlussteil 122 in die Aussparung 122 in dem Atmungs-Simulationselement 110. Wie durch die Pfeile angedeutet wird, kann durch die Auf- und Abwärtsbewegung des Abschlussteils 122 der Atmungsschlitz 215 erweitert bzw. verengt werden. Durch die Erweiterung bzw. Verengung des Atmungsschlitzes 215 bewegen sich die durch den Atmungsschlitz 215 gebildeten beiden Hälften des Atmungs-Simulationselements 110 jeweils in eine seitliche Richtung.

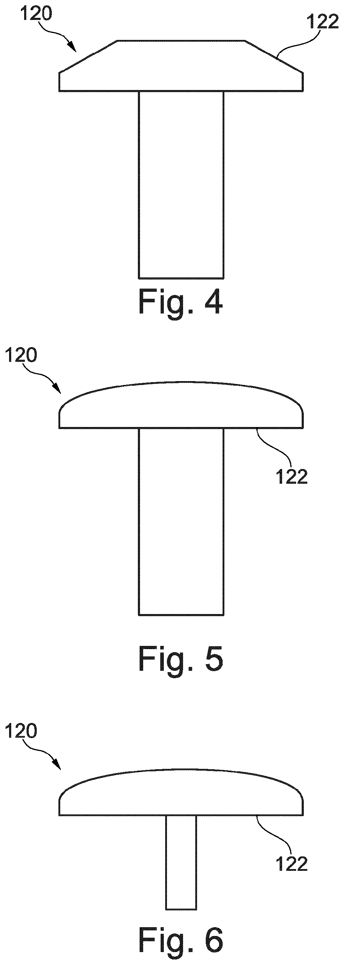

**Figuren 4 bis 6** zeigen Querschnitte verschiedener Ausformungen von Antriebselementen 120. Die Antriebselemente weisen jeweils ein Abschlussteil 122 auf, welches auf ein zylinderförmiges Basisteil aufgesetzt ist. In Figuren 4 und 5 verjüngt sich jeweils das Abschlussteil 122 mit zunehmender Entfernung vom Rumpfelement. In Figur 4 ist eine frustokonische Ausbildung des Abschlussteils 122 dargestellt. In Figur 5 weist das Abschlussteil 122 eine nach außen gerichtete Wölbung auf. In einer hier nicht dargestellten Draufsicht sind die Antriebselemente 120 der Figuren 4 und 5 inklusive der jeweiligen Abschlussteile 122 rotationssymmetrisch.

Schließlich zeigt Figur 6 eine bogenförmige Ausbildung des Abschlussteils 122. Ein solches bogenförmiges Abschlussteil 122 ist beispielsweise geeignet, um bei einer Aufteilung des Atmungs-Simulationselements in eine Vielzahl von Rippen die Kraft auf die Rippen zu verteilen. Das bogenförmige Abschlussteil 122 der Figur 6 ist in einer Draufsicht üblicherweise nicht rotationssymmetrisch, sondern weist eine Haupterstreckungsrichtung auf.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: Dummy-Vorrichtung
- 101: Rumpfelement
- 102: Kopfelement
- 103: Halsgelenk
- 110: Atmungs-Simulationselement
- 111: Bauchbereich
- 112: Brustbereich
- 113: Befestigung
- 214: Befestigungsschlitz
- 215: Atmungsschlitz
- 216: Aussparung
- 120: Antriebselement
- 121: Atmungssimulations-Aktuator
- 122: Abschlussteil
- 130: Gliedmaßenelement
- 131: rumpfnahes Glied
- 132: rumpffernes Glied
- 133: erstes Gliedteil
- 134: zweites Gliedteil
- 135: Gelenk
- 136: weiteres Gelenk
- 137: Gliedmaßen-Antriebselement
- 140: Steuereinrichtung
- 141: Steuerkabel
- 251: erster Drehpunkt
- 252: zweiter Drehpunkt
- 253: erster weiterer Drehpunkt
- 254: zweiter weiterer Drehpunkt

## Patentansprüche

1. Eine Dummy-Vorrichtung (100), aufweisend
ein Rumpfelement (101), welches einen Rumpf eines Menschen nachbildet;
ein Atmungs-Simulationselement (110), welches das Rumpfelement (101) zumindest teilweise überdeckt und welches beweglich in Bezug auf das Rumpfelement (101) angeordnet ist; und
ein Antriebselement (120), welches eingerichtet ist, das Atmungs-Simulationselement (110) sequenziell von dem Rumpfelement (101) weg und zu dem Rumpfelement (101) hin mit einer Atmungsfrequenz zu bewegen, um eine Bewegungscharakteristik einer menschlichen Atmung nachzubilden.

2. Die Dummy-Vorrichtung (100) gemäß Anspruch 1, wobei das Atmungs-Simulationselement (110) einen Bauchbereich (111) des Rumpfelements (101) und einen Brustbereich (112) des Rumpfelements (101) jeweils zumindest teilweise überdeckt.

3. Die Dummy-Vorrichtung (100) gemäß Anspruch 2, wobei das Antriebselement (120) in dem Bauchbereich (111) angeordnet ist, so dass ein Atmungshub in dem Bauchbereich (111) größer ist als ein Atmungshub in dem Brustbereich (112).

4. Die Dummy-Vorrichtung (100) gemäß einem der Ansprüche 1 bis 3, wobei das Antriebselement (120) aufweist zumindest eines von einem aufblasbaren Luftsack und einem Stößel.

5. Die Dummy-Vorrichtung (100) gemäß einem der Ansprüche 1 bis 4, wobei das Antriebselement (120) ein Abschlussteil (122) aufweist, welches gegen das Atmungs-Simulationselement (110) drückt, wobei sich das Abschlussteil (122) zumindest teilweise in eine Aussparung (216) des Atmungs-Simulationselements (110) erstreckt.

6. Die Dummy-Vorrichtung (100) gemäß einem der Ansprüche 1 bis 4, wobei das Atmungs-Simulationselement (110) eine Vielzahl von Rippen aufweist und das Antriebselement (120) ein bogenförmiges Abschlussteil (122) aufweist, welches gegen die Rippen drückt.

7. Die Dummy-Vorrichtung (100) gemäß einem der Ansprüche 1 bis 5, wobei das Atmungs-Simulationselement (110) aufweist zumindest eines von einer Rippe, einer Membran und einer Platte, insbesondere einer flexiblen Platte.

8. Die Dummy-Vorrichtung (100) gemäß einem der Ansprüche 1 bis 7, aufweisend mindestens eines der folgenden Merkmale:
wobei das Atmungs-Simulationselement (110) einen Atmungsschlitz (215) aufweist, der sich weitet, wenn das Atmungs-Simulationselement (110) durch das Antriebselement (120) von dem Rumpfelement (101) wegbewegt wird;
wobei ein Material des Atmungs-Simulationselements (110) ein Elastizitätsmodul zwischen 200 und 1400 MPa aufweist;
wobei das Atmungs-Simulationselement (110) mittels eines Befestigungselements (113) an dem Rumpfelement (101) befestigt ist, wobei insbesondere das Befestigungselement (113) in einer Schiene und/oder einem Befestigungsschlitz (214) beweglich angeordnet ist.

9. Die Dummy-Vorrichtung (100) gemäß einem der Ansprüche 1 bis 8, wobei die Dummy-Vorrichtung (100) ferner aufweist
ein Gliedmaßenelement (130), das mit dem Rumpfelement (101) mittels eines Gelenks (135) beweglich verbunden ist; und
ein Gliedmaßen-Antriebselement (137), welches eingerichtet ist, das Gliedmaßenelement (130) um das Gelenk (135) derart zu bewegen, dass eine weitere Bewegungscharakteristik einer menschlichen Gliedmaßenbewegung nachgebildet wird.

10. Die Dummy-Vorrichtung (100) gemäß Anspruch 9, aufweisend mindestens eines der folgenden Merkmale:
wobei die Bewegungscharakteristik und/oder die weitere Bewegungscharakteristik indikativ sind für zumindest eines von einem Tiefschlafzustand, einem Zustand leichten Schlafs, einem Aufwachzustand, einem Einschlafzustand und einem Wachzustand;
wobei die Bewegungscharakteristik und/oder die weitere Bewegungscharakteristik indikativ sind für zumindest eines von einem Neugeborenen, einem Baby, einem Kleinkind, einem Kind, einem Jugendlichem und einem Erwachsenen.

11. Die Dummy-Vorrichtung (100) gemäß einem der Ansprüche 9 bis 10, wobei das Gliedmaßen-Antriebselement (137) eingerichtet ist, das Gliedmaßenelement (130) irregulär um das Gelenk (135) zu bewegen, insbesondere unabhängig von der Bewegung des Atmungs-Simulationselements (110).

12. Die Dummy-Vorrichtung (100) gemäß einem der Ansprüche 9 bis 10, wobei das Gliedmaßen-Antriebselement (137) eingerichtet ist, das Gliedmaßenelement (130) in Abhängigkeit von der Bewegung des Atmungs-Simulationselements (110) zu bewegen.

13. Die Dummy-Vorrichtung (100) gemäß einem der Ansprüche 9 bis 12, wobei das Gliedmaßenelement (130) aufweist ein rumpfnahes Glied (131), welches an einem ersten Gliedende mittels des Gelenks (135) mit dem Rumpfelement (101) beweglich verbunden ist, und ein rumpffernes Glied (132), welches mit dem rumpfnahen Glied (131) an einem zweiten Gliedende des rumpfnahen Glieds (131), welches dem ersten Gliedende gegenüberliegt, mittels eines weiteren Gelenks (136) beweglich verbunden ist.

14. Die Dummy-Vorrichtung (100) gemäß Anspruch 13, wobei das rumpfnahe Glied (131) aufweist ein erstes Gliedteil (133), welches einen ersten Drehpunkt (251) des Gelenks (135) mit einem ersten weiteren Drehpunkt (253) des weiteren Gelenks (136) verbindet, und ein zweites Gliedteil (134), welches einen zweiten Drehpunkt (252) des Gelenks (135) mit einem zweiten weiteren Drehpunkt (254) des weiteren Gelenks (136) verbindet.

15. Ein Verfahren zum Betreiben einer Dummy-Vorrichtung (100), das Verfahren aufweisend:
Bereitstellen einer Dummy-Vorrichtung (100), die aufweist
ein Rumpfelement (101), welches einen Rumpf eines Menschen nachbildet, sowie
ein Atmungs-Simulationselement (110), welches das Rumpfelement (101) zumindest teilweise überdeckt und welches beweglich in Bezug auf das Rumpfelement (101) angeordnet ist; und
Bewegen eines Antriebselements (120) der Dummy-Vorrichtung (100) derart, dass sich das Atmungs-Simulationselement (110) sequenziell von dem Rumpfelement (101) weg und zu dem Rumpfelement (101) hin mit einer Atmungsfrequenz bewegt, um eine Bewegungscharakteristik einer menschlichen Atmung nachzubilden.
